# EUROPEAN PATENT SPECIFICATION

(11) **EP 0 553 150 B1**
(45) Date of publication and mention of the grant of the patent: **20.07.1994**
(21) Application number: 91917731.1
(22) Date of filing: 16.10.1991
(51) Int. Cl.: B60S 1/38

(54) **AERODYNAMIC WINDSHIELD WIPER**
AERODYNAMISCHER SCHEIBENWISCHER
ESSUIE-GLACE AERODYNAMIQUE POUR PARE-BRISE

(30) Priority: 19.10.1990 US 599936
(43) Date of publication of application: 04.08.1993
(73) Proprietor: TRIDON LIMITED, Burlington, Ontario L7R 4A2 (CA)
(72) Inventor: BUECHELE, Franz, Lawrenceburg, TN 38464 (US); DIPPLE, Stephen, G., Waterdown, Ontario L0R 2H0 (CA)
(74) Representative: BATCHELLOR, KIRK & CO.
(86) International application number: PCT/CA91/00365
(87) International publication number: WO 92/06868

(56) References cited:
- DE-A- 3 532 535
- GB-A- 2 195 076
- US-A- 3 037 233

## Description

### Technical Field

This invention relates to the structure of a windshield wiper which supports a squeegee for wiping a windshield and which distributes pressure applied to the squeegee from the wiper arm. It is well known that such structures interfere with the natural air flow pattern created about a windshield when a vehicle moves at high speed and that in certain circumstances this interference will result in the windshield wiper being lifted away from the windshield with obviously undesirable consequences.

### Background Art

Wing attachments, secured to the windshield wiper body and shaped to redirect the air flow pattern so as to push the wiper against the windshield, are one of the kinds of structures which have been developed to address this problem. In other cases, the windshield wiper superstructure itself is profiled to disturb an oncoming air stream to cause a drag effect instead of a lift effect, for example in U.S.-A-4,400,845. In the structure of this patent, like many others, a major surface of the wiper is inclined relative to the windshield in use. In U.S.-A-4,852,206 (EP-A-0280806), the degree of inclination of this surface relative to the oncoming air stream varies along the length of the primary yoke. Another approach to the problem has been to provide apertures to allow air flow to pass through the structure as in U.S.-A-3,089,174 or GB-A-2 195 076 (corresponding to the preamble of claim 1).

In some of the windshield wiper structures which carry an inclined surface for air flow control, it is recognized that air flow through the structure beneath the inclined surface will occur and operate to create a negative pressure thereby minimizing lift.

To applicant's knowledge no structure has been devised in which this air flow through the structure, which in some orientations of the wiper must necessarily impinge on the wiper structure, is harnessed so as to positively push the wiper against the windshield with a minimum of turbulence.

The object of this invention is to provide a windshield wiper superstructure having an aerodynamic profile whereby the tendancy of a wiper to lift away from a windshield in use is minimized.

### Disclosure of Invention

In accordance with the invention, there is provided a longitudinally extending primary yoke for use in a windshield wiper assembly adapted for connection to a wiper arm drivable to reciprocate the assembly over a windshield with and against a natural prevailing air flow over said windshield, the primary yoke (24) comprising:
transversely spaced leeward and windward sides relative to said air flow, said sides having a predetermined separation between opposed inner surfaces and defining a gap therebetween which extends through the primary yoke between the bottom and the top sides thereof through which gap air may pass characterized in that said predetermined separation increases from a minimum at an operative bottom side of the yoke to a maximum at an operative top side of the yoke remote from the windshield, thereby minimizing any turbulence which may be created when said air flow impinges on the primary yoke;
the leeward side extending upwardly above the windshield by a distance defining the effective height of the leeward side, and windward side similarly extending upwardly above the windshield by a distance defining the effective height of the windward side, said effective height of the leeward side exceeding the effective height of the windward side for at least a portion of the length of the yoke so that the leeward side is exposed to air flowing across the yoke over the windward side on said portion.

### Description of Drawings

A preferred embodiment of the invention will now be described with reference to the accompanying drawings, in which:
Fig. 1 is a perspective view illustrating a windshield wiper assembly incorporating a primary yoke made according to the invention;
Fig. 2 is an end elevational view of the wiper of Fig. 1;
Fig. 3 is a perspective view from the top of the primary yoke;
Fig. 4 is a side elevational view of the primary yoke from the leeward side;
Fig. 5 is a side elevational view of the primary yoke from the windward side;
Fig. 6 is a top plan view of the primary yoke;
Fig. 7 is a bottom plan view of the primary yoke;
Fig. 8 is an end elevational view of the primary yoke;
Fig. 9 is a cross-sectional view on line 9-9 of Fig. 7;
Fig. 10 is a cross-sectional view on line 10-10 of Fig. 7;
Fig. 11 is a cross-sectional view on line 11-11 of Fig. 7;
Fig. 12 is a cross-sectional view on line 12-12 of Fig. 7 showing the profile of the primary yoke;
Fig. 13 is a similar view to Fig. 12 on line 13-13 of Fig. 1;
Fig. 14 is a similar view to Fig. 12 on line 14-14 of Fig. 1; and

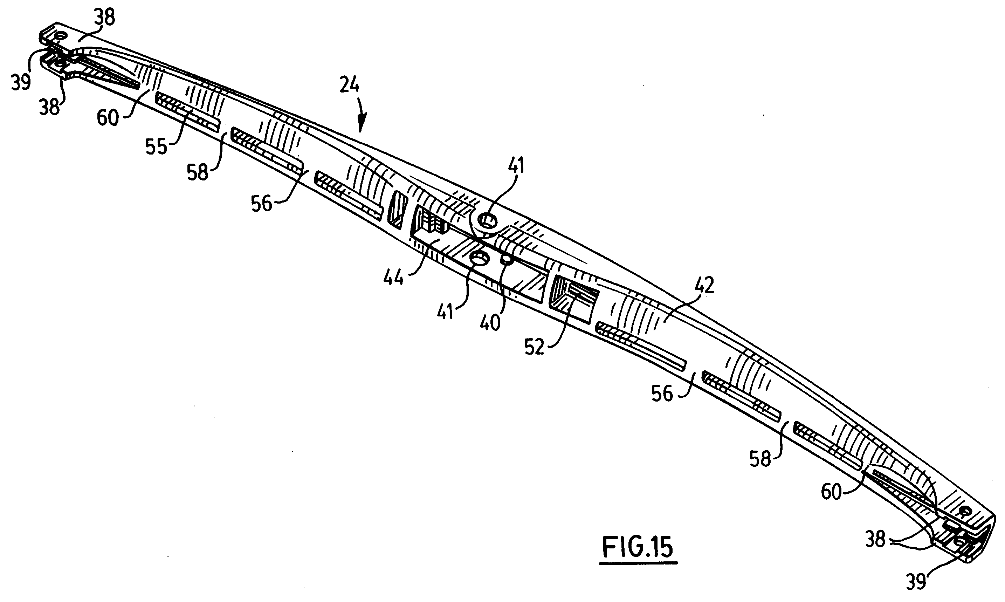

Fig. 15 is a perspective view from the bottom of the primary yoke.

### Best Mode for Carrying Out the Invention

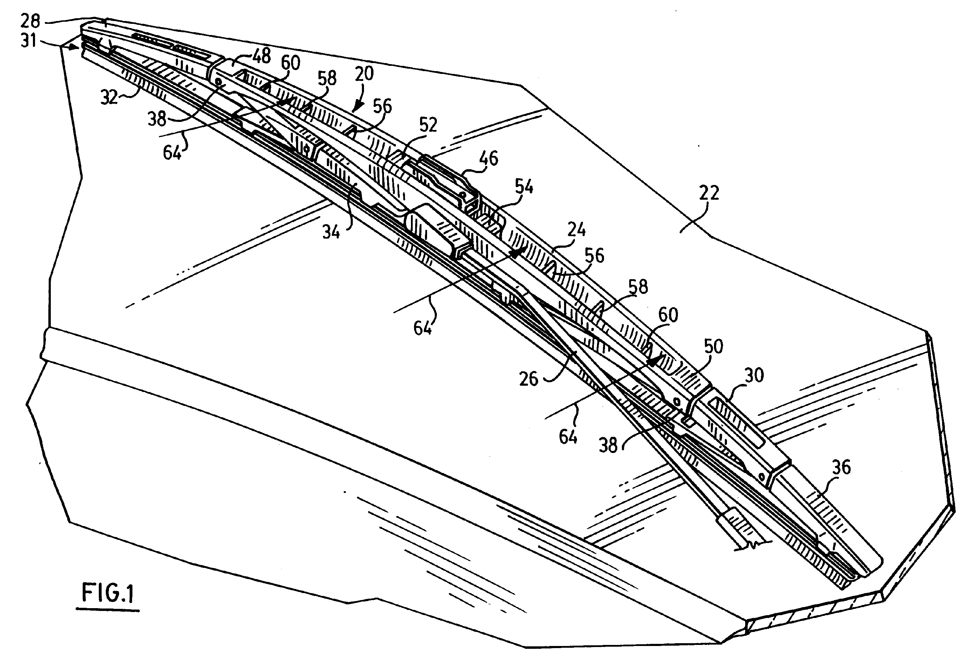

A windshield wiper assembly according to the invention is generally indicated by numeral 20 in Fig. 1 in an operative orientation on a windshield 22. The wiper has a superstructure comprising a primary yoke 24 which is attached on its windward side to a wiper arm 26 driven by a motor (not shown) to reciprocate over the windshield 22. A pair of secondary yokes 28, 30 are attached to respective ends of the primary yoke 24. Tne secondary yokes 28, 30 are pivoted between their ends to the primary yoke 24 such that an inner end lies underneath the primary yoke and an outer end is exposed to define an extension of the primary yoke. In the case of the secondary yoke 28 remote from the wiper arm 26, the outer end also defines an outer extremity for the windshield wiper 20 and has a pair of oppositely directed claws for slidably receiving a windshield wiper refill 31 including a squeegee 32. A first tertiary yoke 34 is pivoted between its ends to the inner end of the secondary yoke 28 and also has, at each end, a pair of oppositely directed claws for slidably receiving the refill 31. At the inner end of the wiper nearest the arm 26, the inner end of the secondary yoke 30 has oppositely directed claws to receive the refill 31 and at its outer end, pivotally supports a second tertiary yoke 36 of which the inner end lies underneath the associated secondary yoke 30 and the outer end is exposed to define a continued extension of the secondary yoke 30 and the primary yoke 24. The outer end of said tertiary yoke 36 also carries a pair of oppositely directed claws which similarly to the other claws, slidably receives the refill 31. It will be noted that this arrangement of the tertiary yoke 36 at the inner end of the wiper allows the wiper to conform to a greater curvature in the windshield 22.

The subject of the invention is the primary yoke 24. It will be appreciated from the description which follows that the arrangement of the secondary yokes and tertiary yokes as described above are merely illustrative and not intended to limit the scope of the protection sought.

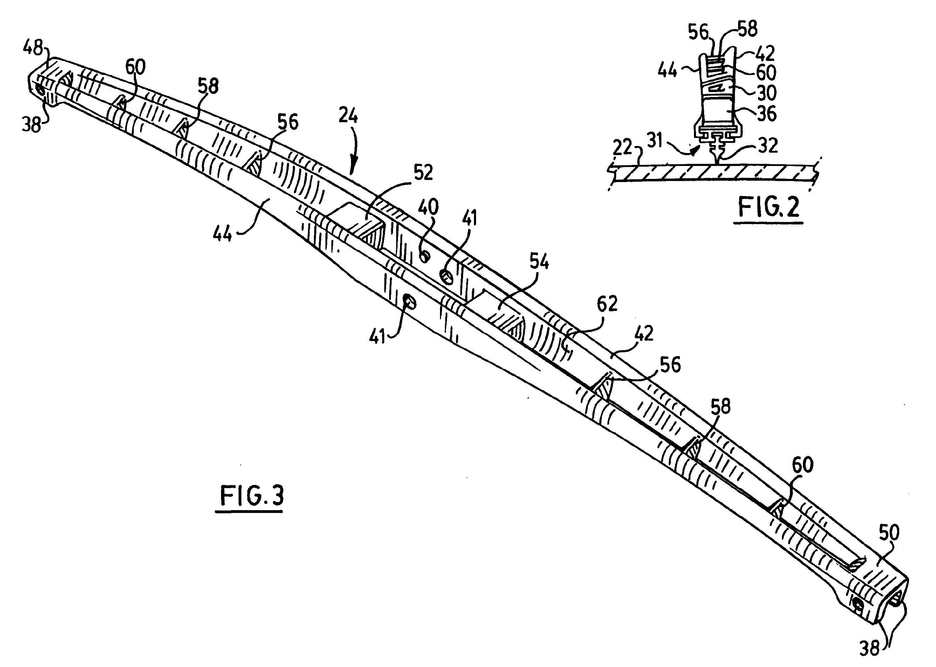

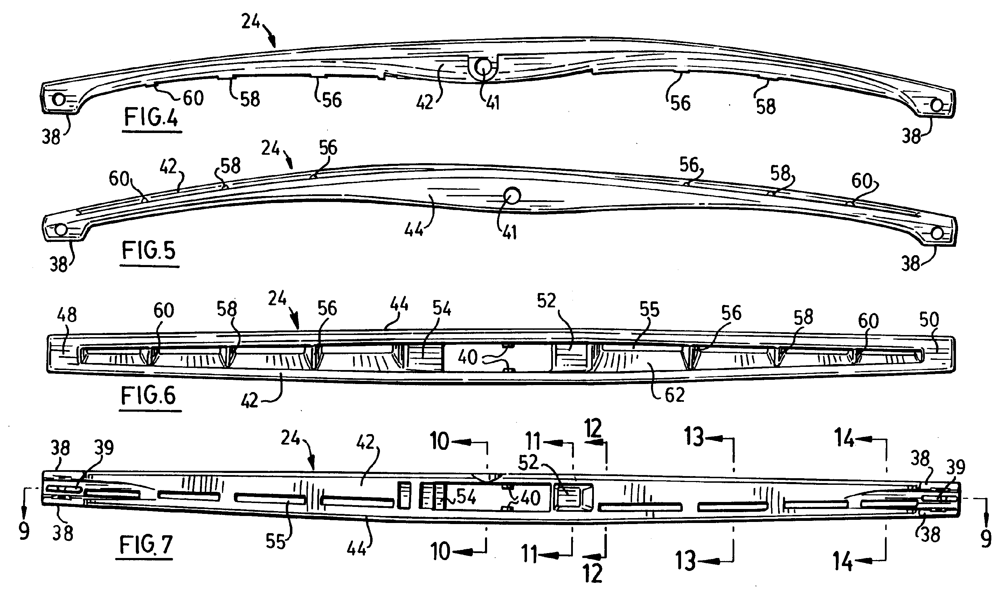

The primary yoke comprises transversely spaced leeward and windward sides 42, 44 (Figs. 3, 6) which extend along the length of the primary yoke 24. An adaptor 46 (Fig. 1) is slidably received between the sides on a pair of opposite inwardly directed stubs 40 and establishes the connection between the primary yoke 24 and the wiper arm 26. A pair of opposed apertures 41 is also formed in the sides 42, 44 for location of a pin (not shown) attached to the wiper arm 26 and secured in the adaptor.

Transversely extending webs 48, 50, 52, 54 lying generally parallel to the windshield 22 in the operative orientation of the wiper 20 bridge a gap 55 defined between the leeward 42 and windward 44 sides and are provided at the ends of the primary yoke 24 and centrally between the ends to either side of the stubs 40. Apertured opposite flanges 38 depend downwardly from the end webs 48, 50 and pivotally receive the secondary yokes 28, 30. Locating flanges 39 (Fig. 7) provided between the flanges 38 are received in corresponding slots provided in the secondary yokes. A passage for receiving and accomodating the adaptor 46 is defined by the central webs 52, 54 and the leeward side 42 and windward side 44.

The central webs 52, 54 have some thickness for added strength and rigidity in this area of the structure. The gap 55 extends through the primary yoke 24 between the top and bottom sides and allows air to pass through the structure. In this way, any turbulence from a prevailing air flow 64 (Fig. 1) over the windshield impinging on the primary yoke 24 will be minimized.

The transverse width of the primary yoke 24 is a minimum between the apertured flanges 38, and a maximum in the vicinity of the stubs 40. Three pairs of webs 56, 58, 60 extending upwardly from the windshield in the operative orientation of the wiper and spaced along the length of the primary yoke 24 connect the leeward and windward sides 42, 44 and are dimensioned to maintain the aforesaid alignment, the innermost webs 56 being longer than the outermost webs 60. The webs 56, 58, 60 are oriented upwardly to minimize the surface area exposed to the air flow 64 and any resulting turbulence.

The inner surface 62 of the leeward side 42 between the end webs 48, 50 and the central webs 52, 54 adjacent the adaptor 46 is inclined toward the windward side 44 such that the distance separating it from the windward side is a maximum at the top of the yoke 24 remote from the squeegee 32 and thereby defines a ramp for directing air flow through the primary yoke 24.

As can be seen most clearly in Figs. 2, and 5, the effective height of the leeward side 42 above the windshield 22 exceeds the effective height of the windward side 44 for a portion of their lengths, that is between said end webs 48, 50 of the yoke and the central webs 52, 54 adjacent the adaptor 46. In this way, the leeward side 42 is exposed to the natural prevailing air flow 64 (Fig. 1) across the yoke and over the windward side 42.

Any air flow between the primary yoke 24 and the secondary yokes 28, 30 will impinge on said inclined surface 62 with the effect of pushing the wiper 20 against the windshield 22 and thereby assisting to maintain the squeegee 32 in its operative wiping orientation in the windshield.

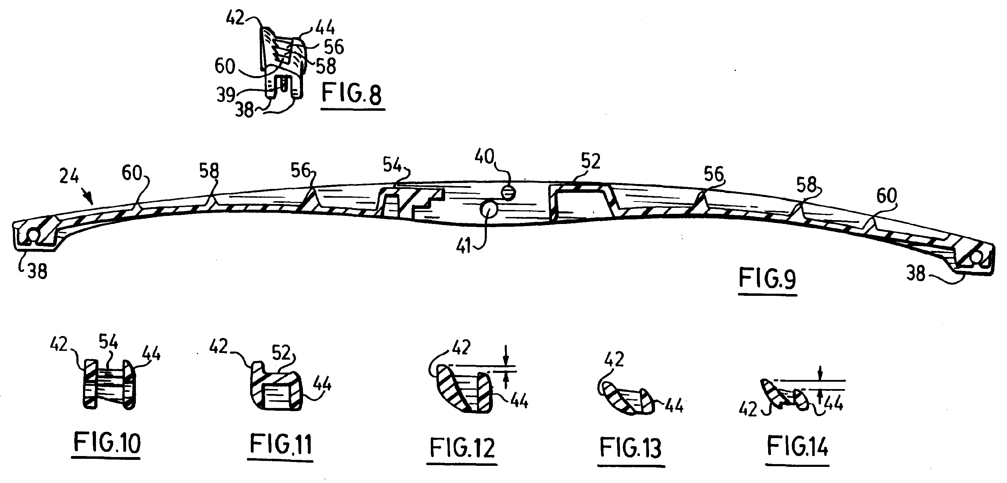

Figs. 12 and 14 show that the relative heights of the windward and leeward sides 42, 44 vary along the length of the primary yoke such that the vertical separation between them is a maximum near the end webs 48, 50 and a minimum at the central webs 52, 54. This configuration allows the downward pressure applied to the primary yoke 24 from the arm 26 to be maximized at the ends 48, 50 of the primary yoke 24 where the connection is made to the secondary yokes 28, 30. In this way the pressure from tne arm 26 is distributed and applied to the squeegee 32.

The exposed portions of the secondary yokes 28, 30 adjacent the pivot connections with the primary yoke 24 are similarly profiled for continuity in the appearance of the wiper and have respective spaced leeward and windward sides. The relative heights of the leeward sides to the windward sides on the secondary yokes 28, 30 are a maximum at the joints with the primary yoke 24 and decrease gradually until the leeward sides and windward sides are equal at the ends remote from the wiper arm 26.

### Industrial Applicability

In use, it will be appreciated that a windshield wiper superstructure including a primary yoke made according to the invention provides a surface which is inclined relative to an oncoming air stream conveniently providing a ramp for directing any air impinging on the primary yoke through the structure and harnassing the force of this air to positively push the wiper against the windshield with a minimum of turbulence. This is particularly advantageous in orientations of the wiper which approach the parked position in which the predominant air flow cannot simply pass between the primary yoke and the underlying secondary yokes.

### INDEX OF REFERENCES SIGNS

- 20: wiper assembly
- 22: windshield
- 24: primary yoke
- 26: wiper arm
- 28: secondary yoke
- 30: secondary yoke
- 31: wiper refill
- 32: squeegee
- 34: 1st tertiary yoke
- 36: 2nd tertiary yoke
- 38: apertured flanges
- 39: locating flange
- 40: stubs
- 41: apertures
- 42: leeward side
- 44: windward side
- 46: adaptor
- 48: end web
- 50: end web
- 52: central web
- 54: central web
- 55: gap
- 56: web pair
- 58: web pair
- 60: web pair
- 62: leeward side inner surface
- 64: air flow

## Claims

1. A longitudinally extending primary yoke (24) for use in a windshield wiper assembly (20) adapted for connection to a wiper arm (26) drivable to reciprocate the assembly (20) over a windshield (22) with and against a natural prevailing air flow (64) over said windshield (22), the primary yoke (24) comprising:
transversely spaced leeward (42) and windward (44) sides relative to said air flow (64), said sides having a predetermined separation between opposed inner surfaces and defining a gap (55) therebetween which extends through the primary yoke (24) between the bottom and the top sides thereof through which gap air may pass, characterized in that said predetermined separation increases from a minimum at an operative bottom side of the yoke (24) to a maximum at an operative top side of the yoke remote from the windshield (22), thereby minimizing any turbulence which may be created when said air flow (64) impinges on the primary yoke (24);
the leeward side (42) extending upwardly above the windshield (22) by a distance defining the effective height of the leeward side, the windward side (44) similarly extending upwardly above the windshield (22) by a distance defining the effective height of the windward side, said effective height of the leeward side exceeding the effective height of the windward side for at least a portion of the length of the yoke (24) so that the leeward side is exposed to air flowing across the yoke over the windward side on said portion.

2. A primary yoke (24) according to Claim 1, in which the relative effective height of the windward side (44) to the leeward side (42) varies on said portion such that the vertical separation between the windward side and the leeward side is at a maximum at opposite ends (48, 50) of the primary yoke (24) so that any downward pressure imported on the primary yoke will be maximized at said ends.

3. A primary yoke (24) according to Claim 1 including transversely disposed alignment means disposed between the inner surfaces of the primary yoke (24) and comprising a number of webs (56, 58, 60) spaced along the length of the yoke and connecting the windward (44) and leeward (42) sides to each other, the webs extending generally upwardly from the windshield (22) and being spaced from one another to minimize the surface area exposed to the air flow (64) and any resulting turbulence which may be created when said air flow impinges on the primary yoke.

4. A windshield wiper assembly which comprises a primary yoke according to any preceding claim.

## Patentansprüche

1. Länglicher Hauptbügel (24) für eine Scheibenwischerkonstruktion (20), der sich zur Verbindung mit einem Wischerarm (26) eignet und derart angetrieben werden kann, daß er die Konstruktion (20) mit dem oder gegen den über der Windsohutzscheibe (22) herrschenden Luftstrom (64) über die genannte Windschutzscheibe (22) hin und her bewegt, wobei dieser Hauptbügel (24) aus den folgenden Teilen besteht;
- bezogen auf den genannten Luftstrom (64) leeseitige (42) und luvseitige (44) Seitenwände mit einem vorgegebenen Abstand zwischen den einander gegenüberliegenden Innenflächen, wodurch ein dazwischenliegender Spalt (55) gebildet wird, der sich durch den Hauptbügel (24) zwischen dessen Unter- und Oberseite erstreckt und durch den der Luftstrom strömen kann, wobei dieser Spalt dadurch gekennzeichnet ist, daß sich der genannte vorgegebene Abstand von einem Minimum an der unteren Seite des Bügels (24) zu einem Maximum an der oberen, von der Windschutzscheibe (22) entfernten Seite verändert, wodurch jede beim Auftreffen des genannten Luftstroms (64) auf den Hauptbügel (24) eventuelle entstehende Turbulenz verhindert wird;
- der leeseitigen Seitenwand (42) die sich von der Windschutzscheibe (22) aus nach oben erstreckt, und zwar über eine Strecke, die die effektive Höhe der leeseitigen Seitenwand bestimmt, und der luvseitigen Seitenwand (44), die sich ähnlich von der Windschutzscheibe (22) aus nach oben erstreckt, und zwar über eine Entfernung, die die effektive Höhe der luvseitigen Seitenwand bestimmt, wobei die genannte effektive Höhe der leeseitigen Wand zumindest über einem Teil der Länge des Bügels (24) größer ist als die der luvseitigen Wand, so daß die leeseitige Seitenwand dem Luftstrom ausgesetzt ist, der quer über die luvseitige Seitenwand und den Bügel hinwegströmt.

2. Hauptbügel (24) nach Anspruch 1, wobei das Verhältnis der effektiven Höhe der luvseitigen Seitenwand (44) zu der der leeseitigen Seitenwand (42) über dem genannten Teil sich so verändert, daß der vertikale Abstand zwischen der luvseitigen und der leeseitigen Seitenwand an den beiden entgegensetzten Enden (48, 50) des Hauptbügels (24) ein Maximum erreicht, so daß ein auf den Hauptbügel nach unten wirkender Druck an den beiden genannten Enden maximiert wird.

3. Hauptbügel (24) nach Anspruch 1, wobei dieser quer angeordnete Ausrichtungselemente enthält, die zwischen den Innenflächen des Hauptbügels (24) angeordnet sind, wobei es sich um eine Anzahl von Stegen (56, 58, 60) handelt, die über die Länge des Bügels verteilt sind und die luvseitige Seitenwand (44) mit der leeseitigen Seitenwand (42) verbindet, wobei die Stege durchweg von der Windschutzscheibe (22) weg orientiert und in solchen Abständen voneinander angeordnet sind, daß die Fläche minimiert wird, die dem Luftstrom (64) oder jeglicher Turbulenz, die beim Auftreffen des genannten Luftstroms auf den Hauptbügel eventuell entstehen kann, ausgesetzt ist.

4. Scheibenwischerkonstruktion, enthaltend einen Hauptbügel nach irgendeinem der vorstehenden Ansprüche.

## Revendications

1. Arcade primaire s'étendant longitudinalement (24) pour emploi dans un ensemble d'essuie-glace pour pare-brise (20) adaptée pour être réunie à un bras de monture d'essuie-glace (26) pouvant être actionné pour imprimer à l'ensemble (20) un mouvement alternatif sur un pare-brise (22) avec et contre un écoulement d'air naturel dominant (64) sur le pare-brise (22), l'arcade primaire (24) comprenant :
- des côtés espacés transversalement sous le vent (42) et au vent (44) par rapport à l'écoulement d'air (64), les côtés ayant une distance de séparation prédéterminée entre leurs faces intérieures opposées, et définissant un espace vide (55) entre celles ci, qui s'étend à travers l'arcade primaire (24) entre ses côtés inférieur et supérieur, lequel espace vide peut être traversé par l'air, caractérisée en ce que la distance de séparation prédéterminée augmente d'un minimum sur un côté inférieur actif de l'arcade (24) à un maximun sur un côté supérieur actif de l'arcade éloignée du pare-brise (22), minimisant ainsi toute turbulence pouvant être créée lorsque l'écoulement d'air (64) frappe l'arcade primaire (24) ;
- le côté sous le vent (42) s'étendant vers le haut au-dessus du pare-brise (22) d'une distance définissant la hauteur effective du côté sous le vent, le côté au vent (44) s'étendant de la même façon vers le haut au-dessus du pare-brise (22) d'une distance définissant la hauteur effective du côté au vent, la hauteur effective du côté sous le vent dépassant la hauteur effective du côté au vent d'au moins une portion de la longueur de l'arcade (24) de telle sorte que le côté sous le vent est exposé à l'air s'écoulant à travers l'arcade sur le côté au vent de cette portion.

2. Arcade primaire (24) selon la revendication 1, dans laquelle la hauteur effective du côté au vent (44) par rapport à celle du côté sous le vent (42) varie sur cette portion de telle sorte que la distance de séparation verticale entre le côté au vent et le côté sous le vent est à un maximum aux extrémités opposées (48, 50) de l'arcade primaire (24) de telle sorte que toute pression descendante importée sur l'arcade primaire sera maximisée à ces extrémités.

3. Arcade primaire (24) selon la revendication 1 comprenant un moyen d'alignement disposé transversalement situé entre les faces intérieures de l'arcade primaire (24) et comprenant un certain nombre de tirants (56, 58, 60) espacés sur la longueur de l'arcade et reliant le côté au vent (44) et le côté sous le vent (42) entre eux, les tirants s'étendant généralement vers le haut du pare-brise (22) et étant espacés les uns des autres pour minimiser la superficie exposée à l'écoulement d'air (64) et toute turbulence résultante pouvant être créée lorsque l'écoulement d'air frappe l'arcade primaire.

4. Ensemble d'essuie-glace pour pare-brise qui comprend une arcade primaire selon l'une quelconque des revendications précédentes.
